# EUROPEAN PATENT SPECIFICATION

(11) **EP 4 096 054 B1**
(45) Date of publication and mention of the grant of the patent: **28.10.2026**
(21) Application number: 22182583.9
(22) Date of filing: 11.03.2015
(51) Int. Cl.: H02J 7/02, H01M 10/44, H02J 7/00, H02J 7/04

(54) **POWER ADAPTER AND TERMINAL**
NETZADAPTER UND ANSCHLUSS
ADAPTATEUR D'ALIMENTATION ET TERMINAL

(30) Priority: 11.11.2014 WO PCT/CN2014/090845; 11.11.2014 WO PCT/CN2014/090846; 11.11.2014 WO PCT/CN2014/090847
(43) Date of publication of application: 30.11.2022
(62) Document number(s) of the earlier application(s) in accordance with Art. 76 EPC: 15858575.2 / 3 131 170
(73) Proprietor: GUANGDONG OPPO MOBILE TELECOMMUNICATIONS CORP., LTD., Wusha, Chang'an Dongguan Guangdong 523860 (CN)
(72) Inventor: Zhang, Jialiang, Dongguan, Guangdong 523860 (CN)
(74) Representative: Santarelli

(56) References cited:
- WO-A1-2014/077978
- US-A1- 2013 207 608
- US-A1- 2014 070 774
- US-A1- 2014 210 449
- US-A1- 2014 300 321

## Description

### TECHNICAL FIELD

The present disclosure generally relates to charging technical field, and more particularly, to a power adapter and a terminal.

### BACKGROUND

Nowadays, smart phones are favored by more and more consumers. However, the smart phone consumes a lot of electricity, and thus needs to be charged frequently. With the increasing of the battery capacity of the smart phone, the charging time becomes longer. Thus, there is a need to realize a quick charging One example is WO 2014/077978.

In the related art, in order to realize the quick charging, typically, the output current or output voltage of the power adapter is directly increased without considering the tolerance capacity of the smart phone, which results in overheating or even burning out of the smart phone, and reduces the life time of the smart phone.

### SUMMARY

The invention is defined by the features of the independent claims. Preferred embodiments are defined in the dependent claims. Embodiments of the present disclosure provide a power adapter and a terminal, which may effectively avoid the overheating of the smart phone caused by blindly increasing the output current or output voltage of the power adapter.

In a first aspect, a terminal is provided. The terminal includes a battery and a charging interface, the terminal introduces a charging current from a power adapter via the charging interface for charging the battery. The terminal further includes a communication unit configured to perform a bidirectional communication with the power adapter via the charging interface, and to determine a charging mode of the terminal.

In combination with the first aspect, in an implementation of the first aspect, the charging mode includes a common charging mode and a first quick charging mode, in which a charging current of the power adapter in the first quick charging mode is greater than that in the common charging mode.

In combination with the first aspect or any one of the above implementations, in another implementation of the first aspect, the charging current in the first quick charging mode is greater than 2.5A.

In combination with the first aspect or any one of the above implementations, in another implementation of the first aspect, the charging mode includes a common charging mode and a second quick charging mode, in which a charging voltage in the second quick charging mode is greater than that in the common charging mode.

In combination with the first aspect or any one of the above implementations, in another implementation of the first aspect, the charging voltage in the second quick charging mode is 9V or 12V.

In combination with the first aspect or any one of the above implementations, in another implementation of the first aspect, the charging mode includes a common charging mode, a first quick charging mode and a second quick charging mode, in which a charging current in the first quick charging mode is greater than that in the common charging mode, and a charging voltage in the second quick charging mode is greater than that in the common charging mode.

In combination with the first aspect or any one of the above implementations, in another implementation of the first aspect, the terminal further includes an identification unit configured to identify a charging mode supported by a charging cable between the power adapter and the terminal, and the communication unit is further configured to determine the charging mode of the terminal according to the charging mode supported by the charging cable and identified by the identification unit.

In combination with the first aspect or any one of the above implementations, in another implementation of the first aspect, the identification unit is specifically configured to send an identification code to a control chip in the charging cable, to receive a feedback code returned by the control chip, to determine whether the feedback code is correct, to determine that the charging cable supports a quick charging mode if the feedback code is correct, and to determine that the charging cable does not support the quick charging mode if the feedback code is incorrect.

In combination with the first aspect or any one of the above implementations, in another implementation of the first aspect, the charging mode includes a common charging mode and a quick charging mode, in which a charging current in the quick charging mode is greater than that in the common charging mode. The communication unit is specifically configured to determine a final charging mode as the quick charging mode if the communication unit determines with the terminal that the charging mode is the quick charging mode and the charging cable supports the quick charging mode, otherwise determine the final charging mode as the common charging mode.

In combination with the first aspect or any one of the above implementations, in another implementation of the first aspect, the battery includes a detection unit configured to detect a voltage value/current value of a cell, and to send the voltage value/current value detected to the terminal.

In combination with the first aspect or any one of the above implementations, in another implementation of the first aspect, the battery further includes a first overvoltage protection unit and a second overvoltage protection unit, in which the second overvoltage protection unit is configured to cut off a voltage between two ends of the cell if the first overvoltage protection unit fails and the voltage between the two ends of the cell in the battery is greater than a rated voltage.

In a second aspect, a power adapter is provided. The power adapter includes a power conversion unit and a charging interface, the power conversion unit charging a terminal via the charging interface. The power adapter further includes: a communication unit, configured to perform a bidirectional communication with the terminal via the charging interface, such that the terminal determines a charging mode; and a voltage control unit and/or a current control unit, configured to control an output voltage and/or an output current of the power conversion unit according to the charging mode determined by the terminal.

In combination with the second aspect, in an implementation of the second aspect, the charging mode includes a common charging mode and a first quick charging mode, in which a charging current of the power adapter in the first quick charging mode is greater than that in the common charging mode.

In combination with the second aspect or any one of the above implementations, in another implementation of the second aspect, the charging current of the power adapter in the first quick charging mode is greater than 2.5A; or, a rated output current of the power adapter is greater than 2.5A.

In combination with the second aspect or any one of the above implementations, in another implementation of the second aspect, the charging mode comprises a common charging mode and a second quick charging mode, in which a charging voltage of the power adapter in the second quick charging mode is higher than that in the common charging mode.

In combination with the second aspect or any one of the above implementations, in another implementation of the second aspect, the charging voltage of the power adapter in the second quick charging mode is 9V or 12V; or, a rated output voltage of the power adapter is 5V, 9V and/or 12V.

In combination with the second aspect or any one of the above implementations, in another implementation of the second aspect, the charging mode includes a common charging mode, a first quick charging mode and a second quick charging mode, in which a charging current of the power adapter in the first quick charging mode is greater than that in the common charging mode, and a charging voltage of the power adapter in the second quick charging mode is greater than that in the common charging mode. The voltage control unit is configured to adjust the output voltage of the power conversion unit to the charging current corresponding to the first quick charging mode if the charging mode determined by the terminal is the first quick charging mode. The current control unit is configured to adjust the output current of the power conversion unit to the charging current corresponding to the second quick charging mode if the charging mode determined by the terminal is the second quick charging mode.

In combination with the second aspect or any one of the above implementations, in another implementation of the second aspect, the charging interface of the power adapter and a charging cable coupling the charging adapter with the terminal are configured as a separation design.

In combination with the second aspect or any one of the above implementations, in another implementation of the second aspect, the charging interface is coupled with the charging cable via a USB A-type interface.

In embodiments of the present disclosure, the power adapter negotiates with the terminal about the charging mode via the communication unit, and controls the output voltage/output current thereof according to the charging mode determined by the communication unit, thus effectively avoiding the overheating or even burning out of the mobile phone caused by blindly increasing the voltage or current of the power adapter.

### BRIEF DESCRIPTION OF THE DRAWINGS

In order to make technique solutions according to embodiments of the present disclosure more apparent, drawings needed to be used in descriptions of the embodiments will be illustrated in the following. Obviously, the drawings to be illustrated in the following only represent some embodiments of the present disclosure, and other drawings can be obtained according these drawings by those having ordinary skills in the related art without making creative labors.
Fig. 1 is a block diagram of a terminal according to an embodiment of the present disclosure.
Fig. 2 is a block diagram of a power adapter according to an embodiment of the present disclosure.
Fig. 3 is a block diagram of a quick charging system according to an embodiment of the present disclosure.
Fig. 4 is a schematic diagram of a cable.

### DETAILED DESCRIPTION

The technical solutions in embodiments of the present invention are hereinafter described clearly and completely with reference to accompanying drawings in embodiments of the present invention. Apparently, embodiments described are a part of embodiments of the present invention, but not all embodiments. All other embodiments obtained by those skilled in the art based on the embodiments in the present invention without creative labor shall fall in the protection scope of the present invention.

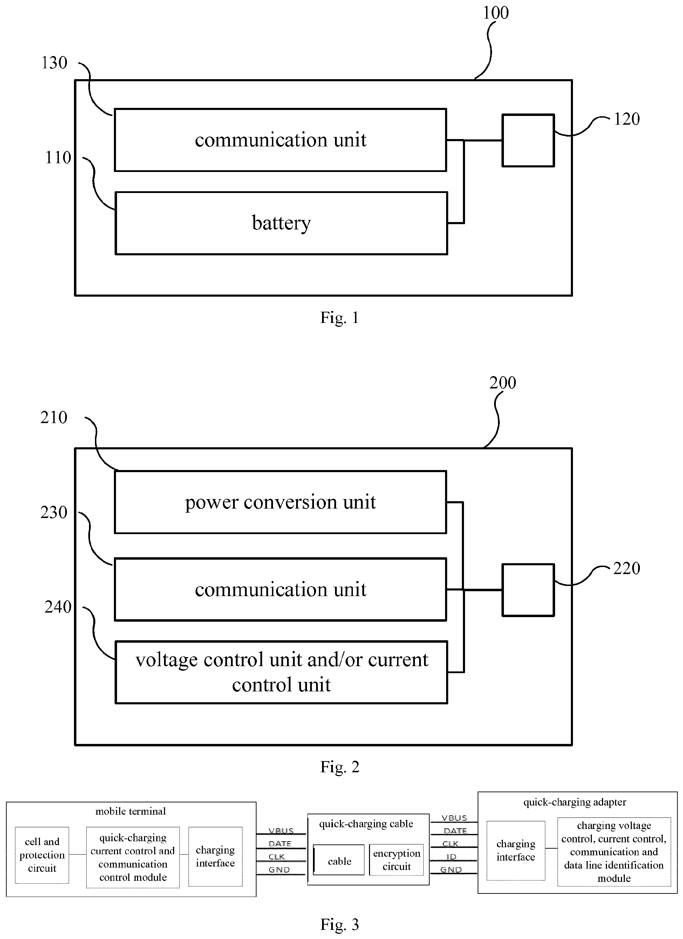

Fig. 1 is a block diagram of a terminal according to an embodiment of the present disclosure. The terminal 100 illustrated in Fig. 1 includes a battery 110 and a charging interface 120. The terminal 100 introduces a charging current from a power adapter via the charging interface 120, for charging the battery 110. The terminal 100 further includes a communication unit 130.

The communication unit 130 is configured to perform a bidirectional communication with the power adapter via the charging interface 120, and to determine a charging mode of the terminal 100.

In embodiment of the present disclosure, the power adapter negotiates with the terminal about the charging mode via the communication unit, and controls the output voltage/output current thereof according to the charging mode determined by the communication unit, thus effectively avoiding the overheating or even burning of the mobile phone caused by blindly increasing the voltage or current of the power adapter.

The charging interface 120 of the terminal 100 may be compatible with a Micro-USB B-type interface or a Type-C interface.

The terminal may have following electrical performances. The charging interface and the charging control circuit can perform safe charging according to their own requirements, and in the whole charging process, the highest temperature of the terminal cannot be greater than 55°C, and moreover, fire, blast and circuit damage cannot be caused.

Furthermore, the charging control circuit in the terminal may have an overvoltage protection device, which can be started when the charging voltage is greater than 12V (undetermined). During the starting of the overvoltage protection circuit, the absorption current thereof is not greater than 20mA. During the whole process, the highest temperature of the terminal should not be greater than 55 °C, and fire, blast and circuit damage cannot occur. After a recovery, the terminal can work normally.

Furthermore, the terminal having a quick charging function can identify whether the power adapter satisfies the quick charging requirement, can monitor the whole charging process in real time, and can use the corresponding charging mode.

Alternatively, as an embodiment, the charging mode includes a common charging mode and a first quick charging mode, in which the charging current of the power adapter in the first quick charging mode is greater than that in the common charging mode.

Specifically, in the first quick charging mode, the output current of the power adapter may be increased (for example, being greater than 2.5A), for increasing the charging power and speed for the terminal. In the common charging mode, the rated output voltage of the power adapter may be 5V, and the rated output current of the power adapter may be less than or equal to 2.5A.

Alternatively, as an embodiment, the charging current in the first quick charging mode is greater than 2.5A, for example, is 5A, and the tolerance may be ±5%.

Alternatively, as an embodiment, the charging mode includes a common charging mode and a second quick charging mode, in which the charging voltage in the second quick charging mode is greater than that in the common charging mode.

Specifically, in the second quick charging mode, the output voltage of the power adapter may be increased (for example, to 9V or 12V), so as to increase the charging power and speed for the terminal.

Alternatively, as an embodiment, the charging voltage in the second quick charging mode is 9V or 12V. Or, the rated output voltage of the power adapter is 5V, 9V and/or 12V, and the tolerance may be ±5%.

Alternatively, as an embodiment, the charging voltage in the second quick charging mode may be 9V or 12V.

Alternatively, as an embodiment, the charging mode includes a common charging mode, a first quick charging mode and a second quick charging mode. The charging current in the first quick charging mode is greater than that in the common charging mode, and the charging voltage in the second quick charging mode is greater than that in the common charging mode.

Alternatively, as an embodiment, the terminal further includes an identification unit. The identification unit is configured to identify a charging mode supported by a charging cable between the power adapter and the terminal 100. The communication unit is further configured to determine the charging mode of the terminal 100 according to the charging mode supported by the charging cable and identified by the identification unit.

Alternatively, as an embodiment, the identification unit is specifically configured to send an identification code to a control chip in the charging cable, to receive a feedback code returned by the control chip, to determine whether the feedback code is correct, to determine the charging cable supports a quick charging mode if the feedback code is correct, and to determine the charging cable does not support the quick charging mode if the feedback code is incorrect.

Alternatively, as an embodiment, the charging mode includes a common charging mode and a quick charging mode, in which the charging current in the quick charging mode is greater than that in the common charging mode. The communication unit is specifically configured to determine a final charging mode as the quick charging mode if the communication unit determines with the terminal that the charging mode is the quick charging mode and the charging cable supports the quick charging mode, otherwise determine the final charging mode as the common charging mode.

Alternatively, as an embodiment, the battery 110 includes a detection unit. The detection unit is configured to detect a voltage value/current value of a cell, and to send the voltage value/current value detected to the terminal 100.

Alternatively, as an embodiment, the battery 110 further includes a first overvoltage protection unit and a second overvoltage protection unit. The second overvoltage protection unit is configured to cut off a voltage between two ends of the cell if the first overvoltage protection unit fails and the voltage between the two ends of the cell in the battery is greater than a rated voltage.

The battery in the terminal may satisfy following functions and requirements.

First, the battery can have a function of reading a voltage value and a current value of a cell (each of the deviation voltage and the current deviation is not allowed to exceed a charging limit allowed by the cell) in real time and sending the read-out value to the terminal precisely.

Next, a temperature rise of each device during charging the battery is not more than 15°C.

Next, after a life test of the battery is performed for 500 times in a quick charging mode and under a condition with a temperature between upper temperature limit and lower temperature limit, the capacity retention ratio of the battery should be greater than 80%.

Next, an actual capacity is greater than or equal to the rated capacity.

Next, GB 31241 requirements should be satisfied.

Next, the battery should have a two-level overvoltage protection function, for protecting the cell from overvoltage charging. When the cell voltage of the battery is greater than the rated voltage value (such as, the cell voltage is equal to (rated voltage value + 0.1 V), which may be 4.4V at present, but is not fixed and undetermined in the future), the charging path of the battery protection board can be switched off automatically, thus starting a voltage protection mechanism.

Fig. 2 is a block diagram of a power adapter according to an embodiment of the present disclosure. As illustrated in Fig. 2, the power adapter 200 includes a power conversion unit 210 and a charging interface 220. The power conversion unit 210 charges a terminal via the charging interface 220. The power adapter 200 further includes a communication unit 230, a voltage control unit and/or current control unit 240.

The communication unit 230 is configured to perform a bidirectional communication with the terminal via the charging interface 220, such that the terminal determines the charging mode.

The voltage control unit and/or current control unit 240 is configured to control an output voltage and/or an output current of the power conversion unit 210 according to the charging mode determined by the terminal.

In embodiments of the present disclosure, the power adapter negotiates with the terminal about the charging mode via the communication unit, and controls the output voltage/output current thereof according to the charging mode determined by the communication unit, thus effectively avoiding the overheating or even burning out of the mobile phone caused by blindly increasing the voltage or current of the power adapter.

Alternatively, as an embodiment, the charging mode includes a common charging mode and a first quick charging mode. The charging current of the power adapter 200 in the first quick charging mode is greater than that in the common charging mode.

Alternatively, as an embodiment, the charging current of the power adapter 200 in the first quick charging mode is greater than 2.5A. Or, a rated output current of the power adapter 200 is greater than 2.5A.

Alternatively, as an embodiment, the charging mode includes a common charging mode and a second quick charging mode. The charging voltage of the power adapter 200 in the second quick charging mode is greater than that in the common charging mode.

Alternatively, as an embodiment, the charging voltage of the power adapter 200 in the second quick charging mode is 9V or 12V. Or, the rated charging voltage of the power adapter 200 is 5V, 9V and/or 12V.

Alternatively, as an embodiment, the charging mode includes a common charging mode, a first quick charging mode and a second quick charging mode. The charging current of the power adapter 200 in the first quick charging mode is greater than that in the common charging mode, and the charging voltage of the power adapter 200 in the second quick charging mode is greater than that in the common charging mode. The voltage control unit is configured to adjust the output voltage of the power conversion unit 210 to the charging current corresponding to the first quick charging mode, if the charging mode determined by the terminal is the first quick charging mode. The current control unit is configured to adjust the output current of the power conversion unit 210 to the charging current corresponding to the second quick charging mode, if the charging mode determined by the terminal is the second quick charging mode.

Alternatively, as an embodiment, the charging interface 220 of the power adapter 200 and the charging cable coupling the power adapter 200 with the terminal are configured as a separation design.

Alternatively, as an embodiment, the charging interface 220 is coupled with the charging cable via a USB A-type interface.

Furthermore, the charging adapter may have following electrical performances.

### Output voltage ripple

| Input voltage | Simulated load test condition | Output ripple limit |
|---|---|---|
| 100-240Vac/50-60Hz | 0-reference output current | Less than or equal to peak value 200mV |

### Short current

| Input voltage | Simulated load test condition | Short-circuit current limit |
|---|---|---|
| 100-240Vac/50-60Hz | Short-circuit | Less than 1.5 times of the rated output current, and not more than 2500mA |

In any case and no matter whether the power adapter is coupled with a power supply, the current flowing from the terminal to the power adapter should not be greater than 5mA.

The pick-up current flowing from the AC power supply to the output port via the power adapter should be not more than 20 uA.

The safety performance satisfies GB 4943.1 requirements.

Moreover, the quick-charging power adapter may have functions of identifying a quick-charging data line and detecting an abnormal interface insert-connection. The quick-charging power adapter may have an automatic protection function for the short circuit. When the fault is removed, the adapter may return to work automatically.

Furthermore, the energy efficiency of the power adapter may satisfy a certain requirement. For example, the actual value of the average efficiency of the power adapter should not be less than a value calculated by the following formula:$average efficiency ⩾ 0.0750 * Ln \left(Pno\right) + 0.561$ where, Pno is the rated output power of the power adapter, i.e., the rated output voltage multiplied by the rated output current.

No-load power consumption satisfies:

| Input voltage | Simulated load test condition | Power consumption limit |
|---|---|---|
| 220V/50Hz | Open circuit | Less than 150mW |

Furthermore, the insertion and extraction force and life of the charging interface may satisfy following requirements.

When the coupler plug is inserted into or extracted from the coupler socket, the rate of the insertion or extraction may not exceed 12.5mm/min. The force required to insert the coupler plug into the coupler socket entirely may not be greater than 35N, and the force required to extract the coupler plug from the coupler socket entirely may not be less than 10N.

If the insertion/extraction is performed for 3000 cycles at the rate of 200 cycles per hour, the mechanical structure may not be damaged after the insertion/extraction, and the force required to extract the coupler plug from the coupler socket entirely may not be less than 8N.

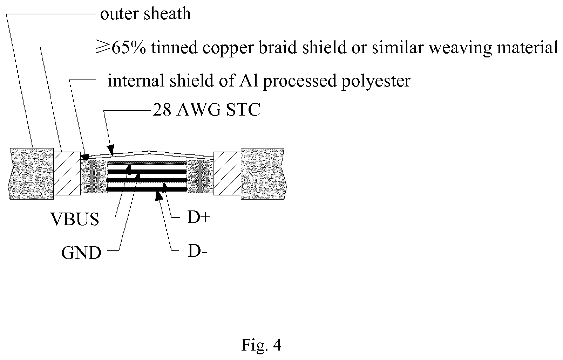

In the following, embodiments of the present disclosure are described in detail with reference to specific examples. It should be noted that, examples in Figs. 3 and 4 are merely used to help those skilled in the art understand embodiments of the present disclosure, but are not used to limit embodiments of the present disclosure by specific values or specific scenes illustrated in the examples. Obviously, various equivalent modifications or changes may be made by those skilled in the art according to examples illustrated in Figs. 3 and 4, and such modifications or changes also fall into the scope of embodiments of the present disclosure.

A quick charging system is illustrated in Fig. 3, the quick charging system includes a mobile terminal (having a battery), a quick charging cable, and a quick-charging power adapter. The mobile terminal mainly includes a cell and a cell protection circuit, a quick-charging current control circuit module, a communication control module and a charging interface. Also, an encryption circuit module is provided in the cable for identifications performed by the power adapter and the terminal, and the specific implementation is determined by the manufactory. The quick-charging power adapter includes a charging interface, a charging voltage control module, a current control module, a communication module and a data line identification module. After the terminal performs a handshake communication with the power adapter, it is determined whether both sides satisfy a quick charging requirement and a suitable quick charging mode is determined, and then a corresponding voltage and current is provided by the power adapter for charging the terminal. The power adapter and the cable may adopt a separation design, and may be coupled with each other via the USB A-type interface.

The power adapter may be designed by taking the longitudinal compatibility and the horizontal compatibility into consideration. The horizontal compatibility refers to that, the quick-charging power adapter can identify whether the cable and the terminal satisfy the quick charging requirement, and adopt a corresponding charging mode; the terminal having the quick charging function can identify whether the power adapter satisfies the quick charging requirement, and adopt a corresponding charging mode. The horizontal compatibility refers to that, the power adapter having the quick charging function can provide the corresponding quick charging for the terminal having the quick charging function, and the terminal having the quick charging function can identify all the power adapters having the quick charging function and perform the quick charging.

Furthermore, the structure and material of the cable between the power adapter and the terminal may be required to satisfy following requirements or indices.
1. The input end of the cable adopts a USB A-type structure, and the output end of the cable is compatible with a Micro-USB B-type interface or a Type-C interface.

If the coupling cable is used for both data transmission and power supply, the structure thereof should satisfy the requirement illustrated in Fig. 4 (same as that for USB A-series coupling cables). The coupling cable is formed of four wires, two of which are power wires (VBUS is a positive wire and GND is a negative wire), and the other two (D+, D-) of which are signal lines.

The material should satisfy GB/T 22727.1 requirements. The content of polycyclic aromatic hydrocarbons (PAHs) in the material is less than 200mg/kg, and the content of benzopyrene is less than 20mg/kg.

The material may be Polyethylene (PE) or other better material.

The length of the coupling cable is not greater than 200cm.

The outer sheath should enclose completely shielded pairs of power wires and signal wires, and should be directly coupled with the outer shielding of tinned copper wires.

For the cable supporting the voltage-rise quick charging, the maximum resistance should not be greater than 0.232 Ω /m.

For the cable supporting the current-rise quick charging, the maximum resistance should not be greater than 0.1 Q /m.

The insulation resistance of the USB A-type connection interface and the insulation resistance of the Micro-USB B-type connection interface should not be less than 1000M Ω.

The insulation material of the USB A-type connection interface can bear an AC voltage having an effective value of 500V, and the insulation material of the Micro-USB B-type connection interface can bear an AC voltage having an effective value of 100V. During a high-voltage holding test lasting for 1 minute, there should be no breakdown, fire or flashover. The electric leakage should be not more than 0.5mA.

The flame retardance of the insulation material of the cable (not including the connector) should reach V-1 level or a higher level.

When the coupler plug is inserted into or extracted from the coupler socket at a rate less than 12.5mm/min, the force required to insert the coupler plug into the coupler socket entirely should not be greater than 35N, and the force required to extract the coupler plug from the coupler socket entirely should not be less than 10N.

If the insertion/extraction is performed for 3000 cycles at the rate of 200 cycles per hour, the mechanical structure may not be damaged after the insertion/extraction, and the force required to extract the coupler plug from the coupler socket entirely may not be less than 8N.

Those skilled in the art can be aware that, units and algorithm steps in respective examples described with reference to embodiments disclosed in the present disclosure can be realized by electronic hardware or combination of computer software and electronic hardware. Executing these functions in hardware or software depends on particular applications and design constraint conditions of the technical solutions. Technology professionals can use different methods to realize the described functions for each particular application, which should be regarded as being within the scope of the present disclosure.

Those skilled in the art can understand clearly that, for convenience and simplicity of description, specific working process of the above system, devices and units may refer to corresponding process in the above method embodiments, which will not be elaborated herein.

It should be understood that, the system, devices and method disclosed in several embodiments provided by the present disclosure can be realized in any other manner. For example, the device embodiments described above can be merely exemplary, for example, the units are just divided according to logic functions. In practical implementation, the units can be divided in other manners, for example, multiple units or components can be combined or integrated into another system, or some features can be omitted or not executed. In addition, the mutual coupling or direct coupling or communication connection described or discussed can be via some interfaces, and indirect coupling or communication connection between devices or units may be electrical, mechanical or of other forms.

The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure.

In addition, respective functional units in respective embodiments of the present disclosure can be integrated into one processing unit, or can be present as separate physical entities. It is also possible that two or more than two units are integrated into one unit.

If the functions are realized in form of functional software units and are sold or used as separate products, they can be stored in a computer readable storage medium. Based on this understanding, the parts of the technical solutions or the essential parts of the technical solutions (i.e. the parts making a contribution to the related art) can be embodied in form of software product, which is stored in a storage medium, and includes several instruction used for causing a computer device (for example, a personal computer, a server or a network device) to execute all or part of steps in the methods described in respective embodiments of the present disclosure. The above storage medium may be any medium capable of storing program codes, including a USB flash disk, a mobile hard disk, a Read-Only Memory (ROM), a Random Access Memory (RAM), a disc, or a light disk.

The forgoing description is only directed to preferred embodiments of the present disclosure, but not used to limit the present disclosure. All modifications, equivalents, variants and improvements made within the principle of the present disclosure shall fall within the protection scope of the present disclosure. Thus, the protection scope of the present disclosure shall be limited by the protection scope of the claims.

## Claims

1. A terminal (100), comprising a battery (110) and a charging interface (120), the terminal (100) introducing a charging current from a power adapter via the charging interface (120) for charging the battery (110), wherein, the terminal (100) further comprises:
a communication unit (130), configured to perform a bidirectional communication with the power adapter via the charging interface (120), and to determine a charging mode of the terminal (100);
an identification unit, configured to identify a charging mode supported by a charging cable between the power adapter and the terminal (100),
wherein the communication unit (130) is further configured to determine the charging mode of the terminal (100) according to the charging mode supported by the charging cable and identified by the identification unit,
**characterised in that** the identification unit is configured to determine whether the charging cable supports a quick charging mode according to a feedback code from the charging cable, wherein, the charging mode comprises a common charging mode, a first quick charging mode and a second quick charging mode, in which a charging current in the first quick charging mode is greater than that in the common charging mode, and a charging voltage in the second quick charging mode is greater than that in the common charging mode.

2. The terminal (100) according to claim 1, wherein, the charging current of the power adapter in the first quick charging mode is greater than 2.5A.

3. The terminal (100) according to claim 1 or 2, wherein, the charging voltage of the power adapter in the second quick charging mode is 9V or 12V.

4. The terminal (100) according to any one of claims 1-3, wherein, the battery (110) comprises:
a detection unit, configured to detect a voltage value/current value of a cell, and to send the voltage value/current value detected to the terminal (100).

5. The terminal (100) according to any one of claims 1-4, wherein, the battery (110) further comprises:
a first overvoltage protection unit and a second overvoltage protection unit, wherein the second overvoltage protection unit is configured to cut off a voltage between two ends of the cell if the first overvoltage protection unit fails and the voltage between the two ends of the cell in the battery is greater than a rated voltage.

6. A power adapter (200), comprising a charging interface (220), and wherein, the power adapter (200) further comprises:
a communication unit (230), configured to perform a bidirectional communication with a terminal via the charging interface (220), and to determine a charging mode for charging the terminal;
a data line identification unit is configured to identify a charging mode supported by a charging cable between the power adapter (200) and the terminal;
wherein the communication unit (230) is further configured to determine the charging mode of the terminal (100) according to the charging mode supported by the charging cable and identified by the data line identification unit,
**characterised in that** the data line identification unit is configured to determine whether the charging cable supports a quick charging mode according to a feedback code from the charging cable, wherein, the charging mode comprises a common charging mode, a first quick charging mode and a second quick charging mode, in which a charging current of the power adapter (200) in the first quick charging mode is greater than that in the common charging mode, and a charging voltage of the power adapter (200) in the second quick charging mode is greater than that in the common charging mode.

7. The power adapter (200) according to claim 6, wherein, the charging current of the power adapter in the first quick charging mode is greater than 2.5A.

## Patentansprüche

1. Endgerät (100), das eine Batterie (110) und eine Ladeschnittstelle (120) umfasst, wobei das Endgerät (100) über die Ladeschnittstelle (120) einen Ladestrom von einem Netzteil zum Laden der Batterie (110) einspeist, wobei das Endgerät (100) ferner Folgendes umfasst:
eine Kommunikationseinheit (130), die ausgelegt ist, über die Ladeschnittstelle (120) eine bidirektionale Kommunikation mit dem Netzteil durchzuführen und einen Lademodus des Endgeräts (100) zu ermitteln;
eine Identifikationseinheit, die ausgelegt ist, einen von einem Ladekabel zwischen dem Netzteil und dem Endgerät (100) unterstützten Lademodus zu identifizieren,
wobei die Kommunikationseinheit (130) ferner ausgelegt ist, den Lademodus des Endgeräts (100) gemäß dem vom Ladekabel unterstützten und von der Identifikationseinheit identifizierten Lademodus zu bestimmen,
**dadurch gekennzeichnet, dass**
die Identifikationseinheit ausgelegt ist, zu ermitteln, ob das Ladekabel gemäß einem Rückmeldecode des Ladekabels einen Schnelllademodus unterstützt, wobei der Lademodus einen normalen Lademodus, einen ersten Schnelllademodus und einen zweiten Schnelllademodus umfasst, bei denen ein Ladestrom im ersten Schnelllademodus größer als der im normalen Lademodus ist und eine Ladespannung im zweiten Schnelllademodus größer als die im normalen Lademodus ist.

2. Endgerät (100) nach Anspruch 1, wobei der Ladestrom des Netzteils im ersten Schnelllademodus größer als 2,5A ist.

3. Endgerät (100) nach Anspruch 1 oder 2, wobei die Ladespannung des Netzteils im zweiten Schnelllademodus 9V oder 12V beträgt.

4. Endgerät (100) nach einem der Ansprüche 1-3, wobei die Batterie (110) umfasst:
eine Erfassungseinheit, die ausgelegt ist, einen Spannungswert/Stromstärkewert einer Zelle zu erfassen und um den erfassten Spannungswert/Stromstärkewert an das Endgerät (100) zu senden.

5. Endgerät (100) nach einem der Ansprüche 1-4, wobei die Batterie (110) ferner umfasst:
eine erste Überspannungsschutzeinheit und eine zweite Überspannungsschutzeinheit, wobei die zweite Überspannungsschutzeinheit ausgelegt ist, eine Spannung zwischen zwei Enden der Zelle abzuschalten, wenn die erste Überspannungsschutzeinheit ausfällt und die Spannung zwischen den beiden Enden der Zelle in der Batterie größer als eine Nennspannung ist.

6. Netzteil (200), das eine Ladeschnittstelle (220) umfasst, und wobei das Netzteil (200) ferner umfasst:
eine Kommunikationseinheit (230), die ausgelegt ist, über die Ladeschnittstelle (220) eine bidirektionale Kommunikation mit einem Endgerät durchzuführen und einen Lademodus zum Laden des Endgeräts zu ermitteln;
eine Datenleitungsidentifikationseinheit, die ausgelegt ist, einen von einem Ladekabel zwischen dem Netzteil (200) und dem Endgerät unterstützten Lademodus zu identifizieren;
wobei die Kommunikationseinheit (230) ferner ausgelegt ist, den Lademodus des Endgeräts (100) gemäß dem vom Ladekabel unterstützten und von der Datenleitungsidentifikationseinheit identifizierten Lademodus zu bestimmen,
**dadurch gekennzeichnet, dass**
die Datenleitungsidentifikationseinheit ausgelegt ist, zu ermitteln, ob das Ladekabel gemäß einem Rückmeldecode des Ladekabels einen Schnelllademodus unterstützt, wobei der Lademodus einen normalen Lademodus, einen ersten Schnelllademodus und einen zweiten Schnelllademodus umfasst, bei denen ein Ladestrom des Netzteils (200) im ersten Schnelllademodus größer als der im normalen Lademodus ist und eine Ladespannung des Netzteils (200) im zweiten Schnelllademodus größer als die im normalen Lademodus ist.

7. Netzteil (200) nach Anspruch 6, wobei der Ladestrom des Netzteils im ersten Schnelllademodus größer als 2,5A ist.

## Revendications

1. Terminal (100), comprenant une batterie (110) et une interface de charge (120), le terminal (100) introduisant un courant de charge à partir d'un adaptateur d'alimentation via l'interface de charge (120) pour charger la batterie (110), dans lequel le terminal (100) comprend en outre :
une unité de communication (130), configurée pour effectuer une communication bidirectionnelle avec l'adaptateur d'alimentation via l'interface de charge (120), et pour déterminer un mode de charge du terminal (100) ;
une unité d'identification, configurée pour identifier un mode de charge pris en charge par un câble de charge entre l'adaptateur d'alimentation et le terminal (100),
dans lequel l'unité de communication (130) est en outre configurée pour déterminer le mode de charge du terminal (100) selon le mode de charge pris en charge par le câble de charge et identifié par l'unité d'identification,
**caractérisé en ce que**
l'unité d'identification est configurée pour déterminer si le câble de charge prend en charge un mode de charge rapide selon un code de rétroaction provenant du câble de charge, dans lequel le mode de charge comprend un mode de charge commun, un premier mode de charge rapide et un seconde mode de charge rapide, dans lequel un courant de charge dans le premier mode de charge rapide est supérieur à celui du mode de charge commun, et une tension de charge dans le seconde mode de charge rapide est supérieure à celle du mode de charge commun.

2. Terminal (100) selon la revendication 1, dans lequel le courant de charge de l'adaptateur d'alimentation dans le premier mode de charge rapide est supérieur à 2,5 A.

3. Terminal (100) selon la revendication 1 ou 2, dans lequel la tension de charge de l'adaptateur d'alimentation dans le seconde mode de charge rapide est 9 V ou 12 V.

4. Terminal (100) selon l'une quelconque des revendications 1-3, dans lequel la batterie (110) comprend :
une unité de détection, configurée pour détecter une valeur de tension/valeur de courant d'une cellule, et envoyer la valeur de tension/valeur de courant détectée au terminal (100).

5. Terminal (100) selon l'une quelconque des revendications 1-4, dans lequel la batterie (110) comprend en outre :
une première unité de protection contre les surtensions et une seconde unité de protection contre les surtensions, dans lequel la seconde unité de protection contre les surtensions est configurée pour couper une tension entre deux extrémités de la cellule si la première unité de protection contre les surtensions tombe en panne et si la tension entre les deux extrémités de la cellule de la batterie est supérieure à une tension nominale.

6. Adaptateur d'alimentation (200), comprenant une interface de charge (220), et dans lequel l'adaptateur d'alimentation (200) comprend en outre :
une unité de communication (230), configurée pour effectuer une communication bidirectionnelle avec un terminal via l'interface de charge (220), et pour déterminer un mode de charge pour charger le terminal ;
une unité d'identification de ligne de données qui est configurée pour identifier un mode de charge pris en charge par un câble de charge entre l'adaptateur d'alimentation (200) et le terminal ;
dans lequel l'unité de communication (230) est en outre configurée pour déterminer le mode de charge du terminal (100) selon le mode de charge pris en charge par le câble de charge et identifié par l'unité d'identification de la ligne de données,
**caractérisé en ce que**
l'unité d'identification de ligne de données est configurée pour déterminer si le câble de charge prend en charge un mode de charge rapide selon un code de rétroaction du câble de charge, dans lequel le mode de charge comprend un mode de charge commun, un premier mode de charge rapide et un seconde mode de charge rapide, dans lequel un courant de charge de l'adaptateur d'alimentation (200) dans le premier mode de charge rapide est supérieur à celui du mode de charge commun, et une tension de charge de l'adaptateur d'alimentation (200) dans le seconde mode de charge rapide est supérieure à celle du mode de charge commun.

7. Adaptateur d'alimentation (200) selon la revendication 6, dans lequel le courant de charge de l'adaptateur d'alimentation dans le premier mode de charge rapide est supérieur à 2,5 A.
